# EUROPEAN PATENT APPLICATION

(11) **EP 3 444 499 A1**
(43) Date of publication of application: **20.02.2019**
(21) Application number: 18186458.8
(22) Date of filing: 31.07.2018
(51) Int. Cl.: F16F 9/52, B60R 7/06, E05F 5/00, F16F 9/53, F16F 9/10, F16F 9/12, H05B 3/16

(54) **TEMPERATURE STABILIZED VISCOUS DAMPER SYSTEM**

(30) Priority: 07.08.2017 US 201762541963 P; 23.07.2018 US 201816042018
(71) Applicant: Illinois Tool Works, Inc., Glenview, Illinois 60025 (US)
(72) Inventor: SPIEGEL, Richard V., Glenview, Illinois 60025 (US); CHOW, Hin Bun, Glenview, Illinois 60025 (US)
(74) Representative: Trinks, Ole

(57) **Abstract**

A viscous damper system (19) includes a body (42) having a chamber (52) disposed inside the body (42) that contains a viscous fluid (63). The viscous damper system (19) also includes a moving member (60) that is disposed inside the chamber (52) that moves to displace the viscous fluid (63). A heater strip (62) is operably coupled to a surface (65) of the body (42). The heater strip (62) includes a heating element (70) and an insulator (68). A connector (64) electrically coupled to the heater strip (62) powers the heater strip (62) to stabilize a temperature of the viscous fluid (63) inside the chamber (52) of the body (42).

## Description

### RELATED APPLICATIONS

This application relates to and claims priority benefits from U.S. Provisional Patent Application No. 62/541,963, entitled "Temperature Stabilized Viscous Damper System," filed August 7, 2017, which is hereby incorporated by reference in its entirety.

### FIELD OF EMBODIMENTS OF THE DISCLOSURE

Embodiments of the present disclosure generally relate to viscous damper systems.

### BACKGROUND

Viscous dampers may be used in applications to control the movement of an object opening and/or closing. Viscous dampers may be linear dampers, hinge dampers, or rotary dampers. Automotive glove compartment doors, for example, may be connected with a linear damper to slow the motion of the door as it opens downward. The linear damper provides an arm attached to the glove compartment door that extends outward from the glove compartment while displacing a viscous fluid. The speed of motion of the arm is limited by the viscous drag of the flowing material which provides a resistance to motion roughly proportional to the velocity of the arm motion.

In one example, a common linear damper provides an air-filled cylinder containing a piston attached to the arm so that motion of the arm causes air to flow through small orifices bypassing the piston. Such air-based linear dampers can be relatively bulky and require tight seals and small orifices that may be difficult to manufacture or maintain.

In an alternative example, an alternative linear damper employs a liquid, such as silicone oil, instead of air. These liquid materials have a much higher viscosity thereby relaxing the necessary tolerances and sealing requirements of the damper. A compact linear damper using a viscous liquid may be created by providing the arm with a gear rack that drives a pinion gear attached to a paddle. The paddle is immersed in a container that holds the viscous liquid and movement of the paddle with motion of the arm provides the desired viscous damping.

It is generally known to try to adjust the mechanism of the damper to accommodate changes in viscosity of the contained viscous fluid, for example, by providing paddle or piston elements that change damper orifice sizes depending on the temperature. Example damping systems are described in US patent 5,743,362 entitled: "Temperature compensated viscous damper" and US patent 5,211,267 entitled: "Temperature compensated rotary damper."

Although viscous liquid dampers have a number of advantages, viscous liquids, such as silicone oil, have viscosities that are highly dependent on temperature. In cold temperatures, such as may be experienced by automobiles parked outside in the winter, the linear damper may limit the motion of the glove compartment door to unacceptably slow speeds and may even prevent access to the glove compartment.

### SUMMARY OF EMBODIMENTS OF THE DISCLOSURE

A need exists for a viscous damper system that accommodates cold-weather operation with the use of a heating element in thermal communication with a reservoir or chamber holding the viscous fluid. The arrangement can maintain an acceptable range of viscosity of the fluid with modest energy consumption, thereby improving the reliability and manufacturability of the linear damper. In applications, such as vehicle glove compartments, the heater may be fed off of the same circuit operating the glove compartment light, thereby eliminating the need for additional wire harnessing.

With those needs in mind, certain embodiments of the present disclosure provide a viscous damper system that includes a body having a chamber disposed inside the body. The chamber contains a viscous fluid. The viscous damper system also includes a moving member that is disposed inside the chamber that moves to displace the viscous fluid. A heater strip is operably coupled to a surface of the body. The heater strip includes a heating element and an insulator. A connector electrically coupled to the heater strip powers the heater strip to stabilize a temperature of the viscous fluid inside the chamber of the body.

In at least one embodiment, the heater strip is a flexible strip that is wrapped around the surface of the body.

In at least one embodiment, the heater strip includes conductive buses that electrically couple the heater strip to the connector.

The conductive buses may be printed on an outer surface of the heating element.

Optionally, the connector is electrically coupled to an electrical system having a switch. The electrical system provides power to the heater strip when the switch is in a first position, and does not provide power to the heater strip when the switch is in a second position.

Optionally, the heater strip consumes power from the electrical system when the switch is in the first position.

In at least one embodiment, the heater strip is configured to stabilize the temperature of the viscous fluid, wherein stabilizing the temperature of the viscous fluid stabilizes a viscosity of the fluid.

In at least one embodiment, the viscous fluid is a silicone oil.

Optionally, the moving member comprises an impeller that is configured to rotate inside the chamber to displace the viscous fluid inside the chamber.

In at least one embodiment, the impeller is operably coupled with a gear via a shaft. The impeller being configured to rotate within the chamber in response to rotation of the gear.

Optionally, the gear is operably coupled with an arm. The impeller being configured to rotate within the chamber as the gear moves along the arm.

In at least one embodiment, the heating element is a positive temperature coefficient ink that is printed on the insulator.

The heater strip may be operably coupled to the surface of the body via an adhesive strip.

In at least one embodiment, the moving member comprises a piston that is configured to move in a linear direction inside the chamber to displace the viscous fluid inside the chamber.

Optionally, the heater strip increases a temperature of the viscous fluid inside the chamber of the body.

### BRIEF DESCRIPTION OF SEVERAL VIEWS OF THE DRAWINGS

Figure 1 illustrates an example of an automotive glove compartment, according to an embodiment of the present disclosure.
Figure 2 illustrates an exploded view of a viscous damper system, according to an embodiment of the present disclosure.
Figure 3 illustrates a partial cross-sectional view of the viscous damper system of Figure 2, according to an embodiment of the present disclosure.
Figure 4 illustrates a schematic diagram of a heater strip, according to an embodiment of the present disclosure.
Figure 5 illustrates a temperature consumption chart, according to an embodiment of the present disclosure.
Figure 6 illustrates a viscous damper system, according to an embodiment of the present disclosure.

Before the embodiments of the disclosure are explained in detail, it is to be understood that the disclosure is not limited in its application to the details of construction and the arrangement of the components set forth in the following description or illustrated in the drawings. The disclosure is capable of other embodiments and of being practiced or being carried out in various ways. Also, it is to be understood that the phraseology and terminology used herein are for the purpose of description and should not be regarded as limiting. The use of "including" and "comprising" and variations thereof is meant to encompass the items listed thereafter and equivalents thereof as well as additional items and equivalents thereof.

### DETAILED DESCRIPTION OF EMBODIMENTS OF THE DISCLOSURE

Embodiments of the present disclosure provide a viscous damper system that includes a body having a chamber disposed inside the body. A viscous fluid and a moving member are disposed inside the chamber. A heater strip is operably coupled to a surface of the body. The heater strip includes a heating element and an insulator. A connector is electrically coupled to the heater strip and powers the heater strip to stabilize a temperature of the viscous fluid inside the chamber of the body. The viscous damper system may accommodate cold-weather operation with the use of the heating element in thermal communication with the chamber holding the viscous fluid.

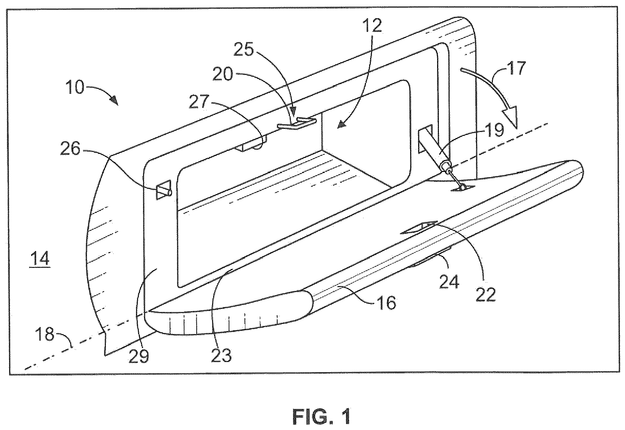

Figure 1 illustrates an example of an automotive glove compartment 10, according to an embodiment of the present disclosure. The glove box or glove compartment 10 may provide a cavity 12, for example, positioned in a dashboard 14 of an automobile. The glove compartment 10 further includes a door 16 that is positioned to cover the cavity 12 and is hingeably attached to a wall 29 surrounding the cavity 12. In the illustrated embodiment, the door 16 opens in the direction of arrow 17 along a hinge axis 18 at a bottom side 23 of the cavity 12. Alternatively, the door 16 may be hingeably attached at a top side 25 or an alternative side of the cavity 12 and the door 16 may open in any alternative direction. The speed at which the door 16 opens may be regulated by a viscous damper system 19 extending between an inner surface of the door 16 and the wall 29 of the cavity 12. Embodiments of the present disclosure provide a glove compartment 10 that includes a door 16 that opens and closes with respect to the cavity 12. For example, the door 16 may be oriented such that the door 16 opens and closes about a vertical axis or a diagonal axis.

The door 16 is held in the closed state covering the cavity 12 by a strike element 20 extending outward at the top side 25 of the cavity 12. The strike element 20 is received by a latch 22 in the door 16 when the door 16 is closed. Optionally, the strike element 20 may be disposed on the door 16 and may be received within a latch in the cavity 12 when the door 16 is closed. In alternative embodiments, the strike element 20 and the latch 22 may be disposed at any alternative side of the cavity 12 and the door 16 or multiple latches and strike elements may be utilized. The strike element 20 is received by the latch 22 and is retained by the latch 22 until activation of the glove compartment door handle 24, which is disposed on an outside of the door 16. In the illustrated embodiment, the door handle 24 is a handle that may be pulled in a direction away from the door 16 to actuate the door handle 24. Alternatively, the door handle 24 may be pushed or pulled in any alternative direction to actuate the door handle 24 and release the strike element 20 from the latch 22. Optionally, the door handle 24 may be disposed on the outside of the dashboard 14.

The glove compartment 10 also includes a door closure switch 26. When the door 16 is closed, an interior surface of the door 16 contacts the door closure switch 26 and presses the door closure switch 26 inward. Opening of the door 16 releases the door closure switch 26 and activates a courtesy lamp 27 for illuminating the cavity 12. Closure of the door 16 activates the door closure switch 26 and deactivates the courtesy lamp 27. For example, when the door 16 is open, the lamp 27 is illuminated (e.g., is turned on), and when the door 16 is closed, the lamp 27 is not illuminated (e.g., is turned off). Additionally, closure of the door 16 activates a heater strip of the viscous damper system 19, as will be described in detail below.

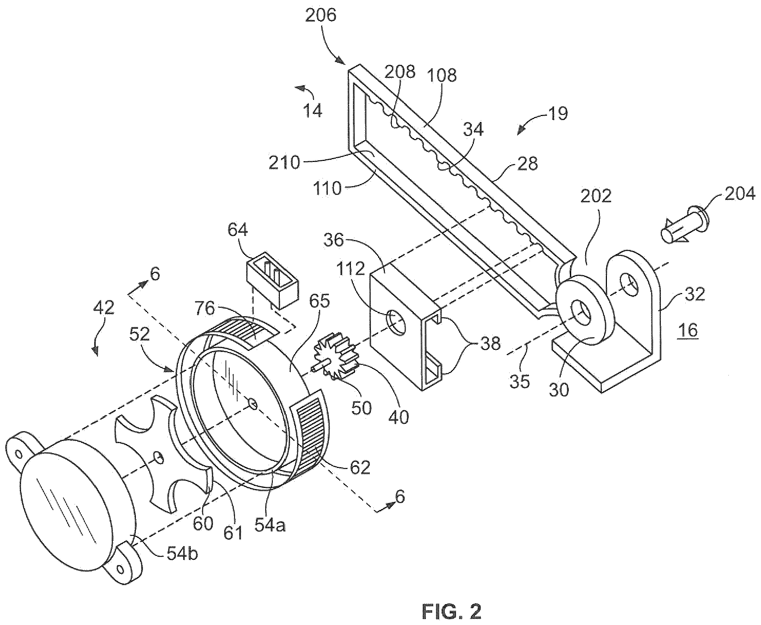

Figure 2 illustrates an exploded view of the viscous damper system 19, according to an embodiment of the present disclosure. The viscous damper system 19 includes an arm 28 that is operably coupled with the door 16. The arm 28 includes a pivot connection joint 30 at a distal end 202 of the arm 28, wherein the pivot connection joint 30 is pivotably attached to a corresponding pivot connection joint 32 affixed to an inner surface of the door 16. In the illustrated embodiment, the two pivot connection joints 30, 32 are joined together by a snap rivet 204 such that the elements (e.g., the door 16 and the arm 28) pivot about an axis 35. Optionally, the arm 28 may be pivotably coupled with the door 16 by an alternative method.

The arm 28 includes a top side 108 and a bottom side 110 that are elongated between the distal end 202 and an opposite second end 206. In the illustrated embodiment, the arm 28 has a substantially rectangular cross-sectional shape; however the arm 28 may have any alternative shape. The arm 28 includes a gear rack 34 that extends between the distal and second ends 202, 206 along an inner top surface 208 of the top side 108 of the arm 28. Optionally, the gear rack 34 may extend along a portion of the inner top surface 208 and/or the gear rack 34 may extend along at least a portion of an inner bottom surface 210 of a bottom side 110 of the arm 28 between the distal and second ends 202, 206. For example, in some embodiments, the gear rack 34 extends along the inner top surface 208 and along the inner bottom surface 210 along at least a portion of the length of the arm 28 and may have mirrored corresponding shapes relative to each other.

A slider 36 having opposed grooved channels 38 engages with the top side 108 and the bottom side 110 of the arm 28 to slide therealong between the distal end 202 and the second end 206. The slider 36 includes a passage 112 that receives a shaft 50 that is attached to a pinion gear 40. The pinion gear 40 is supported by the slider 36 and engages the gear rack 34 to rotate with movement of the slider 36 along the arm 28.

A first end of the shaft 50 is attached to the pinion gear 40 and an opposite second end of the shaft 50 extends into a chamber 52 that is formed by coupling first and second shell halves 54a, 54b of a body 42. The chamber 52 provides a cylindrical closed volume that holds a moving member 60. In the illustrated example of Figure 2, the moving member 60, such as an impeller, is attached to the second end of the shaft 50. The impeller moves by rotating inside the chamber 52 in response to rotation of the pinion gear 40.

In one embodiment, the second shell half 54b may be fixed to an inner wall (not shown) of the cavity 12 so that the arm 28 must move through the slider 36 as the door 16 (of Figure 1) opens and closes. In an alternative embodiment, a cover or casing (not shown) may be positioned over the viscous damper system 19 such that the second shell half 54b may be fixed to the cover and the cover may be fixed to a surface of the cavity 12. Optionally, the viscous damper system 19 may be fixed to the cavity 12 by any alternative means such that the arm 28 moves through the slider 36 as the door 16 opens and closes.

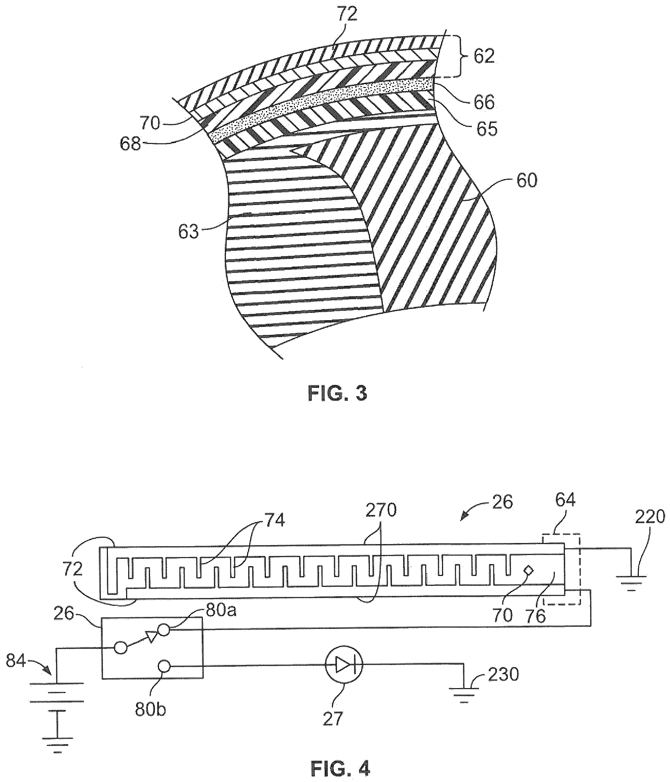

Figure 3 illustrates a partial cross-sectional view of the viscous damper system 19, according to an embodiment of the present disclosure. Referring to Figures 2 and 3, the chamber 52 also contains a viscous fluid 63 (shown in Figure 3) that is displaced by the movement of the moving member 60. The viscous fluid 63 may be silicone oil 63 or the like, or any other suitable material. The movement of the arm 28 through the slider 36 causes rotation of the moving member 60 (e.g., the impeller) within the chamber 52 and displaces the viscous fluid 63 inside the chamber 52. The speed of opening of the door 16 is limited by viscous damping via the viscous fluid 63.

The viscous damper system 19 includes a heater strip 62 that is disposed along and coupled to a surface 65 (shown in Figure 3) of the first shell half 54a of the body 42. In the illustrated embodiment, the surface 65 is an outer surface of the body 42. In one or more embodiments, the heater strip 62 may be coupled to an alternative surface (e.g., an inner surface) of the body 42 or the like. Optionally, the heater strip 62 may be overmolded into the body 42 such that the heater strip 62 may be a unitary component with the body 42. In one embodiment, the heater strip 62 may be directly printed onto the body 42 or directly printed onto an alternative surface of the viscous damper system 19. In the illustrated embodiment, the heater strip 62 is a flexible strip such that the heater strip 62 may be wrapped around the surface 65 of the body 42 and may take the shape of the surface 65 of the body 42. The heater strip 62 is attached to the surface 65, for example, with an adhesive layer 66. In some embodiments, the adhesive layer 66 may be or include a conductive double-sided tape, or the like. In other embodiments, the heater strip 62 may be attached to the surface 65 in any other suitable manner. In one embodiment, the heater strip 62 may be sized such that the heater strip 62 extends around at least a part of or around the entire periphery of the body 42.

The heater strip 62 includes a heating element 70 and an insulator 68. The insulator 68 may be manufactured of a polymer material, a thermoset or thermoplastic material, glass, porcelain, an alternative composite material, or the like. An inner surface of the flexible insulator 68 is coupled to the adhesive layer 66. An outer surface of the insulator 68 is coated with the heating element 70. For example, the heating element 70 may be a positive temperature coefficient ink that may be printed onto the insulator 68, such as disclosed in U.S. Patent Nos. 4,857,711 and 4,931,627, both of which are hereby incorporated in their entirety by reference. In at least one other embodiment, the heating element 70 may include an adhesive layer that may be coupled to the outer surface of the insulator 68. In at least one other embodiment, the heating element 70 may be printed directly onto the body 42 of the viscous damper system 19.

The heating element 70 may be any heating material such that the material provides greater resistance and thereby reduces heating with increased temperatures and increases heating with decreased or lower temperatures to conserve power and eliminate the need for a separate temperature controller, such as a thermostat, or the like. For example, the heating element 70 may be a positive temperature coefficient heater such as a polymer positive temperature coefficient heating element, may be a composite heating element, may be a heating element that is manufactured of a combination of different materials such as platinum, silicon carbide, or the like, or the heating element 70 may be any alternative suitable heating element, material, or device.

The flexible heater strip 62 provides heat to the chamber 52 and to the viscous fluid 63 (e.g., the silicone oil) that is contained within the chamber 52. The heater strip 62 changes a temperature of the viscous fluid 63, which changes the viscosity of the viscous fluid 63. For example, the heater strip 62 may increase the temperature of the viscous fluid 63 to reduce the viscosity of the viscous fluid 63 when the viscous damper system 19 is in a cold environment. The heater strip 62 stabilizes the temperature of the viscous fluid 63, thereby stabilizing the viscosity of the viscous fluid 63 enabling the door 16 to open and close at substantially similar speeds when the viscous damper system 19 is exposed to different temperature environments.

Figure 4 illustrates a schematic diagram of the heater strip 62, according to an embodiment of the present disclosure. Referring to Figures 2, 3, and 4, a pair of electrically conductive buses 72 are disposed on an outer surface of the heating element 70. In one embodiment, the conductive buses 72 may be a metallic ink that may be printed onto the heating element 70. In one other embodiment, the conductive buses 72 may be printed directly onto the body 42 of the viscous damper system 19. The conductive buses 72 are positioned along long edges 270 of the heater strip 62 and may include interdigitated opposed electrode fingers 74 that promote electrical flow through the heating element 70 over a broad area of the heater strip 62. In at least one other embodiment, the conductive buses 72 and/or the electrode fingers 74 may have an alternative configuration, for example may have fewer or more electrode fingers 74, the electrode fingers 74 may be disposed only along one long edge 270 of the heater strip 62, or the like.

The heater strip 62 includes a tab 76 at one end of the heater strip 62. The conductive buses 72 of the heater strip 62 are electrically and/or mechanically coupled to an electrical connector 64 at the tab 76. For example, the conductive buses 72 may be mechanically and electrically coupled with the electrical connector 64 with rivets, or the like.

During use, one conductive bus 72 of the heater strip 62 is connected to a ground 220 and the other conductive bus 72 is connected to a first throw 80a of the door closure switch 26 (shown in Figure 1), which may be a single pole double throw door switch, via the electrical connector 64. In at least one embodiment, the pole of the door closure switch 26 may be connected to an electrical system 84 that may provide a 12 volt DC power supply. A second throw 80b of the door closure switch 26 may be connected through the lamp 27 (of Figure 2) to a ground 230. For example, the same harness and/or door closure switch 26 used for the lamp 27 may be used to provide power to the heater strip 62. The door closure switch 26 may provide power to the lamp 27 only after the door 16 is opened, and the door closure switch 26 may provide power to the heater strip 62 before the door is opened (e.g., while the door is closed). For example, when the door closure switch 26 is in a first position (e.g., connected to first throw 80a) the electrical system 84 provides power to the heater strip 62, and when the door closure switch 26 is in a second position (e.g., connected to the second throw 80b) the electrical system 84 does not provide power to the heater strip 62 but instead provides power to the lamp 27.

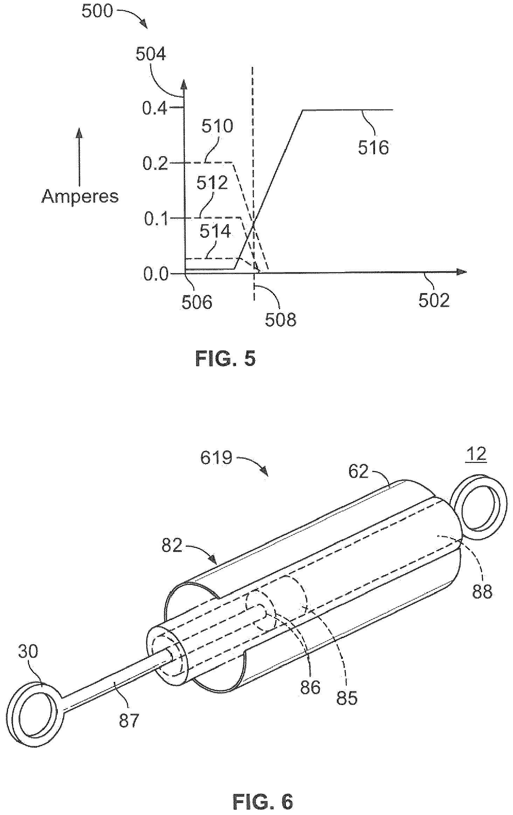

Figure 5 illustrates a temperature consumption chart 500 of the electrical system 84, according to an embodiment of the present disclosure. A horizontal axis 502 represents time and a vertical axis 504 represents amperes. Between a time 506 and a time 508, the door 16 is closed and power is provided to the heater strip 62. After the time 508, the door 16 may be opened and power is provided to the lamp 27. For example, at the time 508, the door closure switch 26 may change from the first position (e.g., such that the electrical system 84 powers the heater strip 62) to the second position (e.g., such that the electrical system 84 powers the lamp 27).

Consumption line 510 illustrates one example of the heater strip 62 consuming approximately 0.2 amperes for a 12-volt system when the ambient temperature and the heater strip 62 are cold. For example, the cold ambient temperature may be less than 50° Fahrenheit, less than 32° Fahrenheit, less than 0° Fahrenheit, or the like. Alternatively, consumption line 512 illustrates one example of the heater strip 62 consuming approximately 0.1 amperes at generally room temperature. For example, the room temperature may be greater than 50° Fahrenheit, may be greater than 60° Fahrenheit, may be greater than 70° Fahrenheit, or the like. Consumption line 514 illustrates one example of substantially no current at a high temperature (e.g., in excess of or greater than room temperature). The consumption lines 510, 512, 514 decrease between the time 506 and the time 508. For example, as time increases, the amount of power needed to stabilize the temperature of the fluid decreases and thereby the heater strip 62 consumes less power as the temperature of the fluid stabilizes. For example, the consumption line 510 illustrates that when the ambient temperature is cold, as the heater strip 62 consumes amperes over time, the amount of amperes consumed over time decreases. For example, it requires less power to stabilize the temperature of the fluid as the temperature of the fluid increases over time.

When the door 16 is open (e.g., after time 508) the door closure switch 26 powers the lamp 27 having a current draw of approximately 0.4 amps illustrated by a consumption line 516. In an alternative embodiment, the heater strip 62 may consume approximately 0.4 amps, more than 0.4 amps, less than 0.4 amps, or substantially no current. Alternatively, the heater strip 62 may be electrically coupled with an alternative electrical system that may provide power to an alternative device, system, or component, that may consume less than or more than 0.4 amps.

Figure 6 illustrates a viscous damper system 619, according to an embodiment of the present disclosure. The viscous damper system 619 is similar to the viscous damper system 19, however the viscous damper system 619 includes a cylindrical linear damper 82 having a moving member 85, such as a piston, that moves in a linear direction inside a closed cylinder 88. The viscous damper system 619 includes bypass orifices 86 that are contained in the closed cylinder 88 that is filled with a viscous fluid, such as silicone oil. The cylinder 88 may be attached, for example, to a sidewall of the cavity 12 of Figure 1, and the piston 85 may be attached to a shaft 87 leading to the pivot connection joint 30. The heater strip 62 is wrapped around and attached to an outer surface of the cylinder 88. For example, the heater strip 62, including a heating element and an insulator may be wrapped around the entire perimeter of the cylinder 88 or just a part of the perimeter of the cylinder 88.

As described herein, embodiments of the present disclosure provide a viscous damper system that accommodates cold-weather operation with the use of a heating element in thermal communication with a reservoir or chamber holding the viscous fluid. The arrangement can maintain an acceptable range of viscosity of the fluid with modest energy consumption, thereby improving the reliability and manufacturability of the linear damper. Additionally, the heater strip may be fed off of the same circuit operating another electrical system, thereby eliminating the need for additional wire harnessing.
While various spatial and directional terms, such as top, bottom, lower, mid, lateral, horizontal, vertical, front and the like may be used to describe embodiments of the present disclosure, it is understood that such terms are merely used with respect to the orientations shown in the drawings. The orientations may be inverted, rotated, or otherwise changed, such that an upper portion is a lower portion, and vice versa, horizontal becomes vertical, and the like.

Variations and modifications of the foregoing are within the scope of the present disclosure. It is understood that the embodiments disclosed and defined herein extend to all alternative combinations of two or more of the individual features mentioned or evident from the text and/or drawings. All of these different combinations constitute various alternative aspects of the present disclosure. The embodiments described herein explain the best modes known for practicing the disclosure and will enable others skilled in the art to utilize the disclosure. The claims are to be construed to include alternative embodiments to the extent permitted by the prior art.

To the extent used in the appended claims, the terms "including" and "in which" are used as the plain-English equivalents of the respective terms "comprising" and "wherein." Moreover, to the extent used in the following claims, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

Various features of the disclosure are set forth in the following claims.

## Claims

1. A viscous damper system comprising:
- a body having a chamber disposed inside the body, wherein the chamber is configured to contain a viscous fluid;
- a moving member disposed inside the chamber, wherein the moving member is configured to move to displace the viscous fluid;
- a heater strip operably coupled to a surface of the body, the heater strip having a heating element and an insulator; and
- a connector electrically coupled to the heater strip, wherein the connector is configured to power the heater strip to stabilize a temperature of the viscous fluid inside the chamber of the body.

2. The viscous damper system of claim 1,
wherein the heater strip is a flexible strip that is configured to be wrapped around the surface of the body.

3. The viscous damper system of claim 1 or 2,
wherein the heater strip includes conductive buses that are configured to electrically couple the heater strip to the connector.

4. The viscous damper system of claim 3,
wherein the conductive buses are configured to be printed on an outer surface of the heating element.

5. The viscous damper system of claim 3,
wherein the connector is electrically coupled to an electrical system comprising a switch, wherein the electrical system provides power to the heater strip when the switch is in a first position, and wherein the electrical system does not provide power to the heater strip when the switch is in a second position.

6. The viscous damper system of claim 5,
wherein the heater strip is configured to consume power from the electrical system when the switch is in the first position.

7. The viscous damper system of one of the preceding claims,
wherein the heater strip is configured to stabilize the temperature of the viscous fluid, wherein stabilizing the temperature of the viscous fluid stabilizes a viscosity of the viscous fluid.

8. The viscous damper system of one of the preceding claims,
wherein the viscous fluid is a silicone oil.

9. The viscous damper system of one of the preceding claims,
wherein the moving member comprises an impeller that is configured to rotate inside the chamber to displace the viscous fluid inside the chamber.

10. The viscous damper system of claim 9,
wherein the impeller is operably coupled with a gear via a shaft, the impeller being configured to rotate within the chamber in response to rotation of the gear.

11. The viscous damper system of claim 10,
wherein the gear is operably coupled with an arm, the impeller being configured to rotate within the chamber as the gear moves along the arm.

12. The viscous damper system of one of the preceding claims,
wherein the heating element is a positive temperature coefficient ink that is printed on the insulator.

13. The viscous damper system of one of the preceding claims,
wherein the heater strip is configured to be operably coupled to the surface of the body via an adhesive strip.

14. The viscous damper system of one of the preceding claims,
wherein the moving member comprises a piston that is configured to move in a linear direction inside the chamber to displace the viscous fluid inside the chamber.

15. The viscous damper system of one of the preceding claims,
wherein the heater strip is configured to increase a temperature of the viscous fluid inside the chamber of the body.
